# EUROPEAN PATENT APPLICATION

(11) **EP 4 648 453 A1**
(43) Date of publication of application: **12.11.2025**
(21) Application number: 23914094.0
(22) Date of filing: 06.01.2023
(51) Int. Cl.: H04W 12/06

(54) **AUTHORIZATION METHOD, AND DEVICE**

(71) Applicant: GUANGDONG OPPO MOBILE TELECOMMUNICATIONS CORP., LTD., Dongguan, Guangdong 523860 (CN)
(72) Inventor: GAN, Lu, Dongguan, Guangdong 523860 (CN); CAO, Jin, Dongguan, Guangdong 523860 (CN); FU, Yulong, Dongguan, Guangdong 523860 (CN); YI, Wei, Dongguan, Guangdong 523860 (CN); TANG, Canhui, Dongguan, Guangdong 523860 (CN); WANG, Chenran, Dongguan, Guangdong 523860 (CN); LI, Hui, Dongguan, Guangdong 523860 (CN); XIONG, Lihui, Dongguan, Guangdong 523860 (CN); SHI, Cong, Dongguan, Guangdong 523860 (CN)
(74) Representative: Penza, Giancarlo
(86) International application number: PCT/CN2023/071098
(87) International publication number: WO 2024/145937

(57) **Abstract**

Provided in the embodiments of the present application are an authorization method and a device. The authorization method comprises: a first network element checking authorization information of a user, and providing data and/or a data analysis result of the user to a second network element when a checking result is the following: allowing the collection and/or analysis of the data of the user, and allowing the data and/or the data analysis result of the user to be provided to the second network element. The embodiments of the present application can strengthen the protection of the data of the user.

## Description

### TECHNICAL FIELD

The present disclosure relates to the field of communications, and more specifically, to an authorization method and a device.

### BACKGROUND

User data in communication networks involves user privacy, and the security of the user data must be ensured. How to authorize user data is a technical problem that needs to be solved.

### SUMMARY

Embodiments of the present disclosure provide an authorization method and a device, which can implement the authorization of user data.

The embodiments of the present disclosure provide an authorization method, including the following operations.

A first network element checks authorization information of a user, and provides data of the user and/or a data analysis result to a second network element when a check result is as follows: collection and/or analysis of the data of the user is allowed; and the data of the user and/or the data analysis result is allowed to be provided to the second network element.

The embodiments of the present disclosure further provide an authorization method, including the following operation.

A third network element sends authorization information of a user to a first network element, for the first network element to check the authorization information of the user.

The embodiments of the present disclosure further provide an authorization method, including the following operation.

A second network element sends a data authorization request, where the data authorization request is used to request data of a user and/or a data analysis result.

The embodiments of the present disclosure further provide an authorization method, including the following operation.

A third network element sends revocation information for user authorization.

The embodiments of the present disclosure further provide an authorization method, including the following operation.

A first network element receives revocation information for user authorization.

The embodiments of the present disclosure further provide an authorization method, including the following operation.

A second network element receives revocation information for user authorization.

The embodiments of the present disclosure further provide a first network element, including a checking module.

The checking module is configured to check authorization information of a user, and to provide data of the user and/or a data analysis result to a second network element when a check result is as follows: collection and/or analysis of the data of the user is allowed; and the data of the user and/or the data analysis result is allowed to be provided to the second network element.

The embodiments of the present disclosure further provide a third network element, including a first sending module.

The first sending module is configured to send authorization information of a user to a first network element, for the first network element to check the authorization information of the user.

The embodiments of the present disclosure further provide a second network element, including a second sending module.

The second sending module is configured to send a data authorization request, where the data authorization request is used to request data of a user and/or a data analysis result.

The embodiments of the present disclosure further provide a third network element, including a third sending module.

The third sending module is configured to send revocation information for user authorization.

The embodiments of the present disclosure further provide a first network element, including a second receiving module.

The second receiving module is configured to receive revocation information for user authorization.

The embodiments of the present disclosure further provide a second network element, including a third receiving module.

The third receiving module is configured to receive revocation information for user authorization.

In the embodiments of the present disclosure, the authorization information of the user is checked by the first network element, so that a dual-layer user authorization check can be implemented, thereby enhancing protection of user data.

### BRIEF DESCRIPTION OF THE DRAWINGS

FIG. 1 is a diagram of an application scenario according to an embodiment of the present disclosure.
FIG. 2A is a diagram of a method of a Network Data Analytics Function (NWDAF) obtaining Network Function (NF) authorization based on user consent.
FIG. 2B is a diagram of a method for checking user consent on a Network Exposure Function (NEF)/Common Application Programming Interface Framework (CAPIF).
FIG. 2C is a diagram of a user consent update method.
FIG. 3 is a flowchart of an implementation of an authorization method 300 according to an embodiment of the present disclosure.
FIG. 4 is a diagram of a user dual-layer authorization mechanism for Artificial Intelligence (AI)/Machine Learning (ML) application auxiliary data according to an embodiment of the present disclosure.
FIG. 5 is a diagram of a dual-layer user consent check and data collection process according to an embodiment of the present disclosure.
FIG. 6 is a diagram of another dual-layer user consent check and data collection process according to an embodiment of the present disclosure.
FIG. 7 is a flowchart of an authorization method 700 according to an embodiment of the present disclosure.
FIG. 8 is a flowchart of an authorization method 800 according to an embodiment of the present disclosure.
FIG. 9 is a flowchart of an authorization method 900 according to an embodiment of the present disclosure.
FIG. 10 is a diagram of a user consent revocation process according to an embodiment of the present disclosure.
FIG. 11 is a flowchart of an authorization method 1100 according to an embodiment of the present disclosure.
FIG. 12 is a flowchart of an authorization method 1200 according to an embodiment of the present disclosure.
FIG. 13 is a structural diagram of a first network element 1300 according to an embodiment of the present disclosure.
FIG. 14 is a structural diagram of a first network element 1400 according to an embodiment of the present disclosure.
FIG. 15 is a structural diagram of a third network element 1500 according to an embodiment of the present disclosure.
FIG. 16 is a structural diagram of a second network element 1600 according to an embodiment of the present disclosure.
FIG. 17 is a structural diagram of a third network element 1700 according to an embodiment of the present disclosure.
FIG. 18 is a structural diagram of a first network element 1800 according to an embodiment of the present disclosure.
FIG. 19 is a structural diagram of a first network element 1900 according to an embodiment of the present disclosure.
FIG. 20 is a structural diagram of a second network element 2000 according to an embodiment of the present disclosure.
FIG. 21 is a structural diagram of a second network element 2100 according to an embodiment of the present disclosure.
FIG. 22 is a structural diagram of a communication device 2200 according to an embodiment of the present disclosure.
FIG. 23 is a structural diagram of a chip 2300 according to an embodiment of the present disclosure.

### DETAILED DESCRIPTION

The technical solutions in the embodiments of the present disclosure will be described below with reference to the drawings in the embodiments of the present disclosure.

It should be noted that the terms "first," "second," and the like in the description and claims of the embodiments of the present disclosure and the drawings are used for distinguishing between similar objects and are not necessarily used for describing a particular sequential or chronological order. The objects described by "first" and "second" described at the same time may be the same or different.

The technical solutions of the embodiments of the present disclosure are applicable to various communication systems, such as a Global System of Mobile Communication (GSM), a Code Division Multiple Access (CDMA) system, a Wideband Code Division Multiple Access (WCDMA) system, a General Packet Radio Service (GPRS), a Long-Term Evolution (LTE) system, an Advanced Long-Term Evolution (LTE-A) system, a New Radio (NR) system, an evolved system of an NR system, an LTE-based Access to Unlicensed Spectrum (LTE-U) system, an NR-based Access to Unlicensed Spectrum (NR-U) system, a Non-Terrestrial Network (NTN) system, a Universal Mobile Telecommunication System (UMTS), a Wireless Local Area Network (WLAN), Wireless Fidelity (WiFi), a 5th-generation (5G) communication system, and/or other communication systems.

Generally speaking, conventional communication systems support a limited number of connections and are easy to implement. However, with the development of communication technologies, mobile communication systems will not only support conventional communications, but also support, for example, Device to Device (D2D) communication, Machine to Machine (M2M) communication, Machine Type Communication (MTC), Vehicle to Vehicle (V2V) communication, and Vehicle to Everything (V2X) communication. The embodiments of the present disclosure are also applicable to these communication systems.

In an implementation, a communication system in the embodiments of the present disclosure is applicable to a Carrier Aggregation (CA) scenario, a Dual Connectivity (DC) scenario, or a Standalone (SA) deployment scenario.

In an implementation, a communication system in the embodiments of the present disclosure may be applicable to an unlicensed spectrum, where the unlicensed spectrum may also be considered as a shared spectrum. Alternatively, a communication system in the embodiments of the present disclosure may also be applicable to a licensed spectrum, where the licensed spectrum may also be considered as an unshared spectrum.

The embodiments of the present disclosure describe various embodiments in conjunction with a network device and a terminal device, where the terminal device may also be referred to as user equipment (UE), an access terminal, a user unit, a user station, a mobile station, a mobile site, a remote station, a remote terminal, a mobile device, a user terminal, a terminal, a wireless communication device, a user agent, or a user apparatus, or the like.

The terminal device may be a station (ST) in a WLAN, a cellular phone, a cordless phone, a Session Initiation Protocol (SIP) phone, a Wireless Local Loop (WLL) station, a Personal Digital Assistant (PDA) device, a handheld device having a wireless communication function, a computing device or another processing device connected to a wireless modem, a vehicle-mounted device, a wearable device, a terminal device in a next-generation communication system such as an NR network, or a terminal device in a future evolved Public Land Mobile Network (PLMN) network, or the like.

In the embodiments of the present disclosure, the terminal device may be deployed on land, including an indoor or outdoor device, a handheld device, a wearable device, or a vehicle-mounted device; it may also be deployed on the surface of water (such as a ship); it may also be deployed in the air (e.g., on an airplane, a balloon, a satellite).

In the embodiments of the present disclosure, the terminal device may be a mobile phone, a tablet computer (Pad), a computer with a wireless transceiving function, a Virtual Reality (VR) terminal device, an Augmented Reality (AR) terminal device, a wireless terminal device in industrial control, a wireless terminal device in self-driving, a wireless terminal device in remote medical care, a wireless terminal device in a smart grid, a wireless terminal device in transportation safety, a wireless terminal device in a smart city, a wireless terminal device in a smart home, or the like.

As an example rather than a limitation, in the embodiments of the present disclosure, the terminal device may also be a wearable device. The wearable device may also be referred to as a wearable smart device, and is a general term for wearable devices that are developed by intelligently designing daily wear applying a wearable technology, such as glasses, gloves, watches, clothes, and shoes. The wearable device is a portable device that is directly worn on the body or integrated into clothes or an accessory of a user. The wearable device is not only a hardware device, but also implements powerful functions by means of software support, data interaction, and cloud interaction. In a broad sense, wearable smart devices include those that are fully functional and large in size, and can implement complete or partial functions without dependence on smart phones, such as smart watches or smart glasses, and those that only focus on a certain type of application function and need to be used in cooperation with other devices such as smart phones, such as various smart bracelets, smart jewelry, for monitoring physical signs.

In the embodiments of the present disclosure, the network device may be a device configured to communicate with a mobile device, and the network device may be an Access Point (AP) in a WLAN, a Base Transceiver Station (BTS) in GSM or CDMA, a NodeB (NB) in WCDMA, an Evolutional Node B (eNB or eNodeB) in LTE, a relay station or an access point, a vehicle-mounted device, a wearable device, a network device (gNB) in an NR network, a network device in a future evolved PLMN network, a network device in an NTN network, or the like.

As an example rather than a limitation, in the embodiments of the present disclosure, the network device may have a mobile characteristic. For example, the network device may be a mobile device. Optionally, the network device may be a satellite or a balloon station. For example, the satellite may be a Low-Earth Orbit (LEO) satellite, a Medium-Earth Orbit (MEO) satellite, a Geostationary Earth Orbit (GEO) satellite, a High Elliptical Orbit (HEO) satellite, or the like. Optionally, the network device may also be a base station disposed on land, in water, or the like.

In the embodiments of the present disclosure, the network device may serve a cell, and the terminal device communicates with the network device through a transmission resource (for example, a frequency domain resource or a spectrum resource) used by the cell. The cell may be a cell corresponding to the network device (for example, a base station). The cell may belong to a macro base station or a base station corresponding to a small cell. The small cell herein may include: a metro cell, a micro cell, a pico cell, a femto cell, and/or the like. These small cells have the characteristics of small coverage and low transmit power, and are suitable for providing high-rate data transmission services.

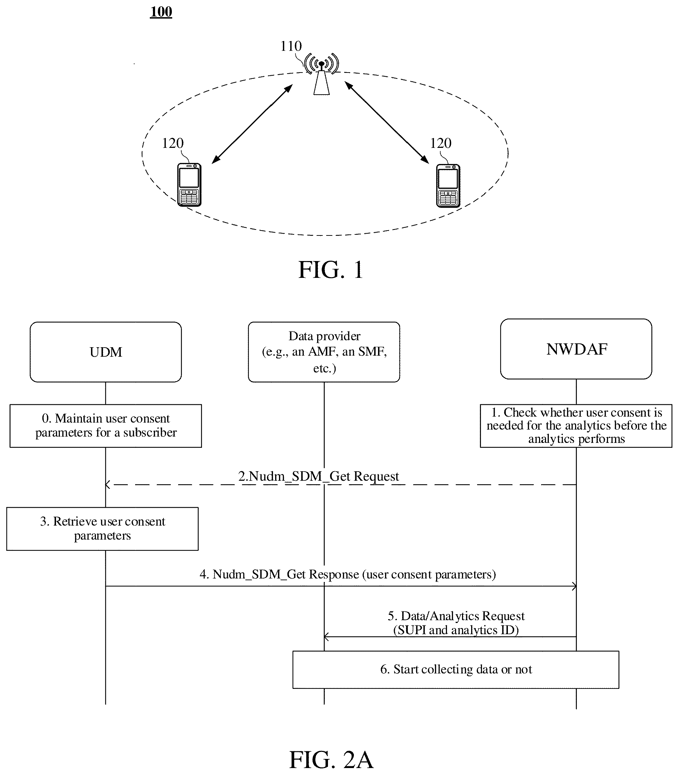

FIG. 1 illustratively illustrates a communication system 100. The communication system 100 includes a network device 110 and two terminal devices 120. In an implementation, the communication system 100 may include multiple network devices 110, and the coverage range of each network device 110 may include another number of terminal devices. The embodiments of the present disclosure are not limited thereto.

In an implementation, the communication system 100 may further include another network entity such as a Mobility Management Entity (MME) or an Access and Mobility Management Function (AMF), and the embodiments of the present disclosure are not limited thereto.

The network device may further include an access network device and a core network device. That is, the wireless communication system further includes multiple core network devices configured to communicate with the access network device. The access network device may be an Evolutional Node B (eNB or e-NodeB for short), a macro base station, a micro base station (also referred to as a "small base station"), a pico base station, an Access Point (AP), a Transmission Point (TP), a new generation Node B (gNodeB), or the like in a Long Term Evolution (LTE) system, a next generation (mobile communication system) (Next Radio, NR) system, or an Authorized Auxiliary Access Long-term Evolution (LAA-LTE) system.

It should be understood that a device having a communication function in the network/system in the embodiments of the present disclosure may be referred to as a communication device. Using the communication system illustrated in FIG. 1 as an example, a communication device may include a network device and a terminal device having communications functions, and the network device and the terminal device may be specific devices in the embodiments of the present disclosure, and details are not described herein again. The communication device may further include other devices in the communication system, such as a network controller, a mobility management entity, and other network entities, and the embodiments of the present disclosure are not limited thereto.

It is to be understood that the terms "system" and "network" herein are often used interchangeably herein. The term "and/or" herein is merely to describe the associations between associated objects, indicating that there can be three kinds of relationships. For example, A and/or B, which may indicate three situations in which A exists alone, A and B exist simultaneously, or B exists alone. In addition, the character "/" herein generally indicates that the associated objects before and after this character are in an "or" relationship.

It should be understood that "indicating" mentioned in the embodiments of the present disclosure may be a direct indication or an indirect indication, or may also represent an association. For example, A indicating B may mean that A directly indicates B, for example, B may be obtained from A; it may also mean that A indirectly indicates B, for example, A indicates C, and B may be obtained from C; it may also mean that there is an association between A and B.

In the description of the embodiments of the present disclosure, the term "corresponding" may represent that there is a direct correspondence or indirect correspondence between two objects, or may represent an association therebetween, or may be the relationship between indicating and being indicated or configuring and being configured, or the like.

To facilitate the understanding of the technical solutions of the embodiments of the present disclosure, the related technologies of the embodiments of the present disclosure are described below. The following related technologies as optional solutions can be arbitrarily combined with the technical solutions of the embodiments of the present disclosure, all of which fall within the scope of protection of the embodiments of the present disclosure.

In order to implement collection and usage of UE-related privacy information by a Network Data Analytics Function (NWDAF), in the related art, a solution is proposed in which the NWDAF obtains Network Function (NF) authorization based on user consent. As illustrated in FIG. 2A, the solution includes the following operations 0-6.

Operation 0: a User Data Management (UDM) maintains user consent for a subscriber.

Operation 1: if the NWDAF receives a specific analytics request from a consumer network element, for example, collecting information of a UE for UE-related analytics, then the NWDAF will check whether user consent is needed for the analytics based on local policies (e.g., laws and regulations).

Operation 2: if the user consent is needed and there are no user consent parameters in a UE context of the NWDAF, the NWDAF will send an Nudm_SDM_Get Request message to the UDM to request to obtain the user consent parameters.

Operation 3: the UDM retrieves the user consent parameters.

Operation 4: the UDM sends an Nudm_SDM_Get Response message to a data providing program. The message includes the user consent parameters. The NWDAF stores the user consent parameters in the UE context of the NWDAF.

Operation 5: the NWDAF sends a data/analytics request to a producer network element (such as an AMF or a Session Management Function (SMF)) based on the user consent parameters, where the request includes an identifier (such as a Subscription Permanent Identifier (SUPI)) of a user and an analytics identifier (ID).

Operation 6: the data providing program starts collecting the requested data based on the result.

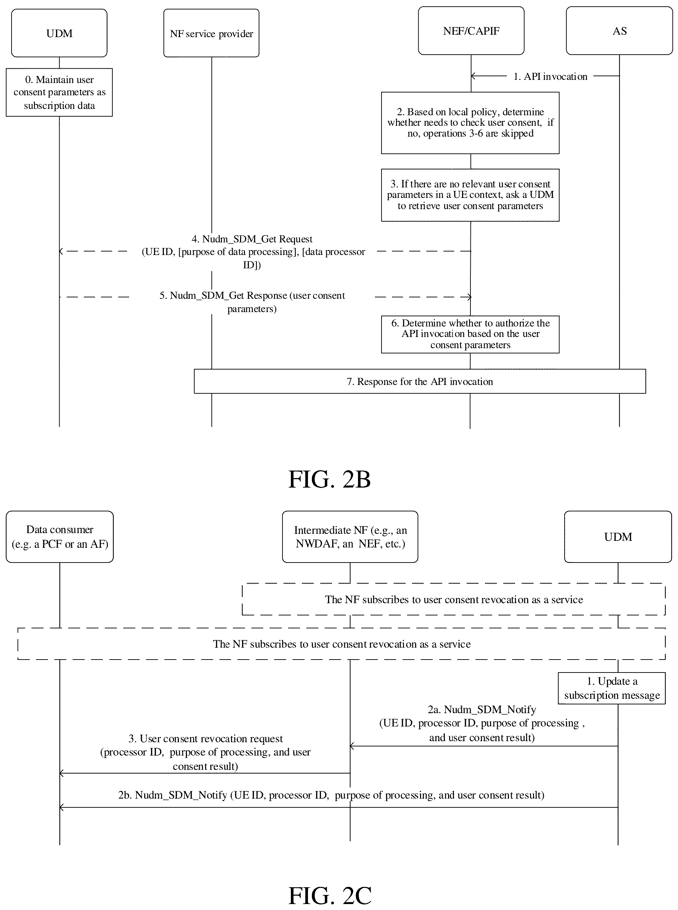

In order to implement secure exposure of information to third parties and protection of user privacy, in the related art, a solution of checking user consent on a Network Exposure Function (NEF)/Common API Framework (CAPIF) is proposed. As illustrated in FIG. 2B, the solution includes the following operations 0-7.

Operation 0: a UDM maintains user consent parameters as subscription data.

Operation 1: an Access Stratum (AS) sends an Application Programming Interface (API) invocation to the NEF/CAPIF to request to process the data of a user. For example, if the invoked service is "Nnef_Location_LocationUpdateNotify" and the input is an AF ID and a GPSI, it means that an Application Function (AF) requires the NEF/CAPPIF to retrieve the location of a UE with a Generic Public Subscription Identifier (GPSI).

Operation 2: based on a local policy of an operator, the NEF/CAPIF determines whether user consent needs to be checked for the invoked service. If the user consent does not need to be checked, operation 7 is executed. If the user consent needs to be checked, operation 3 is executed.

Operation 3: if there are no relevant user consent parameters in a UE context, operation 4 is executed; and if there are relevant user consent parameters in the UE context, operation 6 is executed.

Operation 4: the NEF/CAPIF sends an Nudm_SDM_Get Request message to the UDM, where the message should include a UE ID, and may include a purpose of data processing and a data processor ID.

Operation 5: the UDM returns the requested user consent parameters.

Operation 6: based on the user consent parameters, the NEF/CAPIF determines whether to authorize the API invocation. If it is determined, based on the user consent parameters, that the API invocation is not allowed, the NEF/CAPIF will reject the request of the AF with a specific cause. If it is determined, based on the user consent parameters, that the API invocation is allowed, the NEF/CAPIF accepts the request of the AF. If there are no explicit user consent parameters, the NEF/CAPIF may determine to reject or accept the request of the AF based on the local policy of the operator. Furthermore, if a user consent result for the purpose of the data processing is allowed, the NEF/CAPIF may subscribe to user consent parameter change events on the UDM by using an Nudm_SDM_Subscribe service to maintain the up-to-date user consent.

Operation 7: the NEF/CAIPF responds to the API invocation based on the determination made in operation 6.

A data consumer or an intermediate NF (e.g., including the NWDAF/NEF) may subscribe to user consent revocation as a service of a UDM, and reuse a subscription notification process. Any NF that obtains user consent from the UDM may register the revocation service. In the related art, when the user consent is changed and revoked, a user consent update solution is proposed. As illustrated in FIG. 2C, the solution includes the following operations 1-3.

Operation 1: a UDM updates subscription information upon the revocation of user consent due to a request of a user. The user may request to revoke his or her particular user consent corresponding to user data (e.g., location or identity).

Operation 2a: the UDM sends an Nudm_SDM_Notify message to an intermediate NF, where the Nudm_SDM_Notify message includes a UE ID, a processor ID, a purpose of processing, and a user consent result. The UE ID is related to a user ID, for example, an identifier such as a SUPI or a GPSI of the user. The processor ID is used to indicate a data processor that processes data for the UE, and the processor ID may be represented using a PLMN ID, an AF ID, or the like. The purpose of the processing is associated with the revoked service. The user consent result means that a data handler agrees to process data based on the purpose of data processing (e.g., permission or no permission). After receiving the request, the intermediate NF should delete the data obtained with the user consent, and if the intermediate NF has a data processing function, such as an analytics function or a collection function, the intermediate NF should stop processing the data obtained with the user consent.

Operation 3: if a consumer network element accesses a producer network element through the intermediate NF, the intermediate NF should send a user consent revocation request message to the consumer network element. After receiving the request, the consumer network element should delete the data previously obtained with the user consent, and if the intermediate NF has a data processing function, such as an analytics function or a collection function, the intermediate NF should stop processing the data previously obtained with the user consent.

Operation 2b: the UDM directly sends an Nudm_SDM_Notify message to the consumer network element. This message is the same as the message provided to the intermediate NF. After receiving the request, the consumer network element should delete the data previously obtained with the user consent, and if the intermediate NF has a data processing function, such as an analytics function or a collection function, the intermediate NF should stop processing the data previously obtained with the user consent.

In the existing 3GPP, for a process of obtaining user consent authorization and revocation, only whether to allow user data to be exposed to a network element inside a core network is considered, but whether to allow the user data to be exposed to a third party entity is not considered. Therefore, the protection of user privacy data is insufficient.

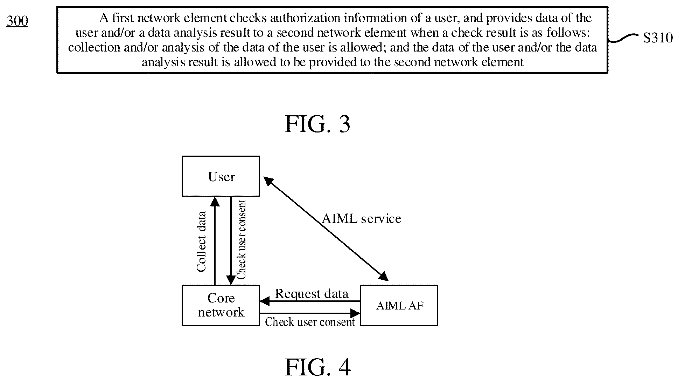

The embodiments of the present disclosure propose an authorization method. FIG. 3 is a flowchart of an authorization method 300 according to an embodiment of the present disclosure, and the method is applicable to the system illustrated in FIG. 1, but is not limited thereto. The method includes at least some of the following contents.

S310: a first network element checks authorization information of a user, and provides data of the user and/or a data analysis result to a second network element when a check result is as follows: collection and/or analysis of the data of the user is allowed; and the data of the user and/or the data analysis result is allowed to be provided to the second network element.

In some implementations, the second network may be an Application Function (AF). For example, in an Artificial Intelligence (AI)/Machine Learning (ML) application scenario, the AF needs data of the user and/or a data analysis result to support the AF in completing an AI/ML operation.

In the embodiments of the present disclosure, before the data of the user and/or the data analysis result is provided to the second network element, a dual-layer user consent mechanism is considered to be performed on the second network element (for example, the AF) and a core network element. Specifically, before collecting and/or analyzing the data of the user, the core network element should first obtain user consent. Moreover, before exposing the data of the user and/or the data analysis result (for example, the privacy data of the user) to the second network element (for example, the AF), the core network element should also obtain user consent. Therefore, a user privacy policy is considered in all aspects to achieve the purpose of protecting the user privacy data to the greatest extent. The dual-layer authorization mechanism proposed in the embodiments of the present disclosure is divided into two phases, including dual-layer user consent check and dual-layer user consent revocation. The authorization method illustrated in FIG. 3 corresponds to a first phase, i.e., a dual-layer user consent check phase.

FIG. 4 is a diagram of a user dual-layer authorization mechanism for AI/ML application auxiliary data according to an embodiment of the present disclosure. As illustrated in FIG. 4, in order to provide an AI/ML service to a user, an AI/ML AF needs to collect user data. The AI/ML AF requests data from a core network. The core network collects data of the user, and before collecting the user data and providing the user data to the AI/ML AF, the core network may check a user consent parameter of the user to determine whether the user consents to the core network collecting or analyzing the data of the user, and whether the user consents to providing the data of the user or a data analysis result to the AI/ML AF. If the user consents to the core network collecting or analyzing the data of the user and consents to providing the data of the user or the data analysis result to the AI/ML AF, the core network collects or analyzes the data of the user, and provides the data of the user or the data analysis result to the AI/ML AF.

Using the core network being a 5G core network as an example, the AF may complete an AI/ML related operation only with the assistance of the 5G core network. Therefore, the AF first needs to initiate an auxiliary information request to the 5G core network, and such auxiliary information may be collected and analyzed by a Network Data Analytics Function (NWDAF) in the core network as an execution point. Therefore, the user is required to confirm whether the relevant data is allowed to be collected by the NWDAF, and whether the requested data or the analysis result is allowed to be disclosed to the AF. The data may include AI/ML auxiliary data.

In some implementations, the first network element includes an NWDAF or an NEF, and the second network element includes an AF. The first network element may receive a data authorization request from the second network element, and then check authorization information of the user involved in the data authorization request. For example, after receiving the data authorization request of the AF for the user, the NWDAF or the NEF checks the authorization information of the user, and when it is determined that the NWDAF or the NEF is allowed to collect and/or analyze the data of the user and is allowed to provide the data of the user and/or the data analysis result to the AF, the NWDAF or the NEF starts to collect and analyze the data of the user, and exposes the results of the collection and analysis to the AF. Through such a dual-layer user authorization mechanism, the collection of the user privacy data by the core network and the exposure of the privacy data to the AF by the core network are separately checked, so that the user privacy policy can be considered in all aspects to implement protection of the user privacy data to the greatest extent. For example, when the AF belongs to an operator network function entity, the NWDAF may execute the foregoing functions such as authorization check, data collection and analysis, and/or data result exposure to the AF. When the AF belongs to a third party function entity independent of the operator, the NEF may execute the foregoing functions such as authorization check, data collection and analysis, and/or data result exposure to the AF.

After receiving the data authorization request, the first network element may determine whether the authorization information of the user needs to be checked, and if so, the first network element may obtain first authorization information of the user and/or second authorization information of the user, and check the authorization information of the user.

In some implementations, the first network element determines, based on a first policy and/or a data type involved in the data authorization request, whether the authorization information of the user needs to be checked. The first policy may include at least one of an operator policy or a regulatory requirement.

In a roaming scenario, the first network element (for example, the NWDAF or the NEF) and the second network element (for example, the AF) belong to different Public Land Mobile Networks (PLMNs). For example, the second network element (for example, the AF) belongs to a Home Public Land Mobile Network (HPLMN), i.e., a network to which a UE is subscribed. The first network element (for example, the NWDAF or the NEF) belongs to a Visited Public Land Mobile Network (VPLMN), i.e., a network to which the UE is connected. In this case, the first network element may separately check local laws and regulations of countries and regions in which the VPLMN and the HPLMN are located, to separately determine whether the first authorization information and the second authorization information need to be checked. Moreover, when the first authorization information and the second authorization information need to be checked, the first authorization information and the second authorization information are separately obtained and checked.

In a non-roaming scenario, the first network element (for example, the NWDAF or the NEF) and the second network element (for example, the AF) belong to the same PLMN. In this case, the first network element may check local laws and regulations of a country and a region in which the UE is located, to determine whether the first authorization information and the second authorization information need to be checked. Moreover, when the first authorization information and the second authorization information need to be checked, the first authorization information and the second authorization information are obtained through one or more signaling interactions.

In some implementations, the first network element may separately check the first authorization information and the second authorization information of the user, where the first authorization information is used to indicate whether the collection and/or analysis of the data of the user is allowed, and the second authorization information is used to indicate whether the data of the user and/or the data analysis result is allowed to be provided to the second network element. For example, if the authorization information includes user consent, the first authorization information may include user consent for the first network element (for example, the NWDAF or the NEF), and the second authorization information may include user consent for the second network element (for example, the AF).

The authorization information (for example, user consent) of the user may be stored in a third network element. For example, the third network element includes a UDM. The third network element maintains the authorization information of the user as subscription data for the first network element. The user consent of the user may include the user consent for the AF and the user consent for the NWDAF.

When checking the first authorization information of the user, the first network element may obtain the first authorization information of the user from the third network element, and after obtaining the first authorization information of the user, may locally store the first authorization information of the user. In some implementations, the first network element checks the first authorization information of the user, which includes: the first network element obtains the first authorization information of the user; and the first network element determines, based on the first authorization information, whether the collection and/or analysis of the data of the user is allowed.

For example, the first network element queries a locally stored UE context, and obtains the first authorization information of the user from the UE context.

Alternatively, the first network element obtains the first authorization information of the user from the third network element.

For the manner of obtaining the first authorization information of the user from the third network element, the first network element may send at least one of an identifier of a UE, an application identifier, or a data usage to the third network element (for example, the UDM), and may receive the first authorization information of the user from the third network element.

Similarly, when checking the second authorization information of the user, the first network element may obtain the second authorization information of the user from the third network element, and after obtaining the second authorization information of the user, may locally store the second authorization information of the user. In some implementations, the first network element checks the second authorization information of the user, which includes: the first network element obtains the second authorization information of the user; and the first network element determines, based on the second authorization information, whether the data of the user and/or the data analysis result is allowed to be provided to the second network element.

For example, the first network element queries a locally stored UE context, and obtains the second authorization information of the user from the UE context.

Alternatively, the first network element obtains the second authorization information of the user from the third network element.

For the manner of obtaining the second authorization information of the user from the third network element, the first network element may send at least one of the identifier of the UE, an application identifier, or a data usage to the third network element (for example, the UDM), and may receive the second authorization information of the user from the third network element.

It should be noted that in a scenario such as a non-roaming scenario, the first network element obtains the first authorization information and the second authorization information of the user from the third network element through one determination and signaling interaction.

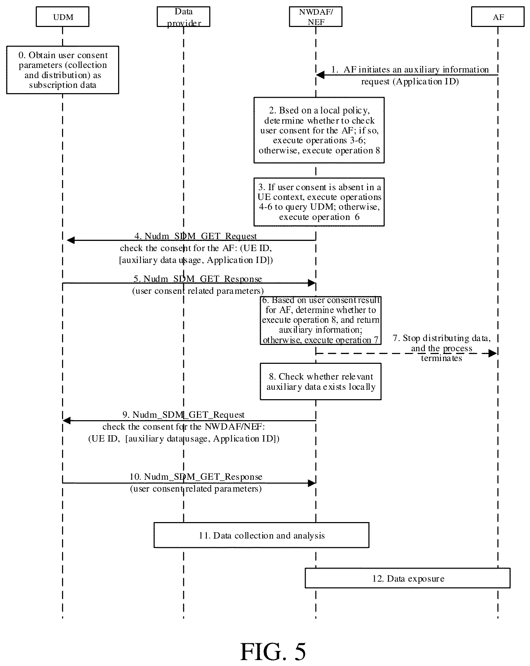

FIG. 5 is a diagram of a dual-layer user consent check and data collection process according to an embodiment of the present disclosure, and the process is applicable to a roaming scenario. In the roaming scenario, the UDM belongs to a home network (HPLMN), the AF belongs to the home network (HPLMN), and the NEF may belong to a visited network. The NWDAF belongs to a visited network (VPLMN), i.e., a network to which the UE is connected. Therefore, in the following operations, the user consent obtained in operation 2 is that for the AF, and the policy of the visited network does not need to be considered. The user consent obtained in operation 8 is that for the NWDAF or the NEF, and the local auxiliary data of the NWDAF or the NEF is a policy that needs to be checked according to local laws and regulations of a country and a region in which the VPLMN is located, and may be inconsistent with the user consent obtained in operation 2. The specific operations illustrated in FIG. 5 are as follows.

Operation 0: a UDM stores user consent information, an operator policy, or a regulatory policy. The user consent information is associated with a user SUPI and stored in the UDM as subscription data.

Operation 1: an AF initiates an AI/ML data authorization request (for example, an auxiliary information request) to an NWDAF or an NEF.

Operation 2: the NWDAF or the NEF checks a local policy of an operator, and determines whether user consent for the AF needs to be checked for requested data (for example, auxiliary data) distributed to the AF, for example, whether it needs to be regulated, and whether it involves the privacy data of the user (such as UE location, mobility, abnormal behavior, etc.). The detailed information is illustrated in Table 1 below.

**Table 1**

| | **Data type** | **Detailed data** | **Solution** | **Data flow direction** | **Privacy protection** |
|---|---|---|---|---|---|
| UE-related data | Network authorization | Network authorization status of UE | #33 | 5GC->AF UE local Existence | Irrelevant |
| | UE status | Location | #23 and #39 | | The home address, workplace, and social relationship of the user can be inferred from location information. Sensitive information such as personal hobbies, life habits, and health conditions of the user may also be predicted. |
| | | CM status | #23 and #39 | | Irrelevant |
| | | UE reachability | #23 and #39 | | Irrelevant |
| | | UE mobility | #8, #23, #27, and #39 | | Similar to the location, it is strongly related to privacy |
| | | UE abnormal behavior | #23, #27, and #39 | | |
| | Local model | Local model size | #6 | 5GC->AF | |
| 5GC-relate d data | Training-relate d | Selected UE list in target AOI | #25 | 5GC->AF | Similar to the location, it is strongly related to privacy |
| | | Geographical distribution information in candidate UE list | #6 | | Similar to the location, it is strongly related to privacy |
| | | Number of training rounds | #6 | | |
| | | Time period of training | #6 | | Time zone information of the user may be inferred by the time period of training, which is weakly related to privacy |
| | | Training interval | #6 | | |
| | | Latency requirement for training | #6 | | |
| | | Expected latency of aggregated and local models | #6 | | |
| | | Latency per round of training | #6 | | |
| | Prediction information | Data packet latency prediction | #2, #6, #10, #23, and #30 | 5GC->UE5 GC->AF | |
| | | Network congestion prediction | #30 | 5GC->UE 5GC->AF | |
| | | Network load prediction with respect to UE location | #6 and #23 | 5GC->AF | Similar to the location, it is strongly related to privacy |
| | Slice-related information | Slice type subscribed to by UE | #6 | | On the basis of slice subscription, the main behavioral habits of the user can be analyzed, which is weakly related to privacy |
| | UE group performance | Group performance type (max, min, mean, and sum) | #21 | | |
| | | Group report type (group member and group report protection time) | #21 | | |
| Network auxiliary data | QoS | QoS sustainability analysis (NWDAF) | #2, #3, #6, #7, and #27 | 5GC->UE 5GC->AF | QoS, a time interval of analytics notifications, or information that may be used to determine an analytics subscription location. |
| | Congestion information | Training congestion window | #6 | 5GC->AF | |
| | Data rate-related information | Monitoring direction of data rate | #7 | 5GC->AF | |
| | | Rate report level | | | |
| | | Rate report period | | | |
| | | Temporal validity | | | |

Using Table 1 as an example, the location of the user, the UE mobility, the UE list selected from the target AOI, the geographical distribution information in the candidate UE list, and the network load prediction with respect to the UE location, and the like are strongly related to privacy, the training time period of the user is weakly related to privacy, and then the local policy of the operator, and the local laws and regulations, and the like are taken into account to determine whether user consent for the AF needs to be checked. The auxiliary information in the embodiments of the present disclosure is not limited to the data included in Table 1, and the auxiliary information may change as the AI/ML service of the AF changes.

If the user consent for the AF needs to be checked, operation 3 is executed, otherwise, operations 3-6 are skipped and operation 6 is directly executed. The AF belongs to a home network, i.e., the HPLMN. Therefore, in operations 2-6, the user consent for the HPLMN is considered, while the user consent for the VPLMN is not considered.

Operation 3: the NWDAF or the NEF retrieves related user consent information, that is, user consent information for the AF, from a related context of a UE maintained in a database of the NWDAF or the NEF, and if the user consent information for the AF is absent in the UE context, operation 4 is executed. If the user consent information for the AF is retrieved in the related context of the UE, operation 6 is executed.

Operation 4: the NWDAF or the NEF sends (UE ID, [auxiliary data usage, Application ID]) to the UDM through the Nudm_SDM_GET_Request interface to check the user consent information. The interface is configured to provide a UDM subscription data management service, and retrieve UE subscription data related to a consumer network element from the UDM through a Get service operation.

Operation 5: the UDM retrieves the user consent information, i.e., the user consent information for the AF, and sends an Nudm_SDM_Get Response message to the NWDAF or the NEF, where returned and queried subscription data includes the user consent information for the AF. After receiving the response message, the NWDAF or the NEF stores the user consent information in the UE context of the NWDAF.

Operation 6: based on the operator policy, the regulatory policy, and the user consent for the AF, the NWDAF or NEF determines whether to provide the data of the user or the data analytics result to the AF. If the data returned by the UDM is that it consents to authorize the data to be used, the NWDAF or the NEF determines that it is authorized to provide the data of the user or the data analysis result to the AF, and the process continues by executing operation 8. Otherwise, the NWDAF or the NEF determines that it is not authorized to provide the data of the user or the data analysis result to the AF, and the process continues by executing operation 7.

Operation 7: the NWDAF or the NEF rejects the auxiliary data request of the AF, the process is terminated, and a specific cause is provided.

Operation 8: the NWDAF or the NEF retrieves whether related auxiliary data exists in local data, and if so, it means that the NWDAF or the NEF has obtained the user consent for the NWDAF/NEF, and does not need to check the user consent for the NWDAF/NEF, then operation 12 is directly executed to expose the related auxiliary data to the AF. If not, the NWDAF or NEF needs to retrieve the user consent parameter for the NWDAF/NEF from the UDM to determine whether to allow the collection and analysis of the related data of the UE, that is, the process continues by executing operation 9. The NWDAF or the NEF is located in the VPLMN, and therefore, the user consent terms that need to be retrieved may be different from those of the HPLMN. Because the data classification and grading laws and regulations in different regions may be different, the local auxiliary data of the NWDAF or the NEF is a policy that needs to be checked according to the local laws and regulations of the country and region in which the VPLMN is located, and may be different from user consent scope terms of the HPLMN in operations 2-6.

Operation 9: the NWDAF or the NEF retrieves the user consent for the NWDAF/NEF in the UDM through the Nudm_SDM_GET_Request interface.

Operation 10: the UDM retrieves the user consent information for the NWDAF/NEF, and sends an Nudm_SDM_Get_Response message to the NWDAF or the NEF, where the message includes the user consent information for the NWDAF/NEF. After receiving the user consent information for the NWDAF/NEF, the NWDAF or the NEF stores the user consent parameter for the NWDAF/NEF in the UE context.

Operation 11: if it is determined that the NWDAF or the NEF is allowed to collect and analyze the data of the user based on the user consent parameter for the NWDAF/NEF, the NWDAF or the NEF sends a data/analysis request to a data provider, where the data provider may include core network element(s) such as an AMF and/or an SMF, and may further include core network element(s) that may be subsequently added newly. Moreover, the NWDAF or NEF starts collecting the requested data based on the result.

Operation 12: the NWDAF or the NEF notifies the AF of the data or the analysis result.

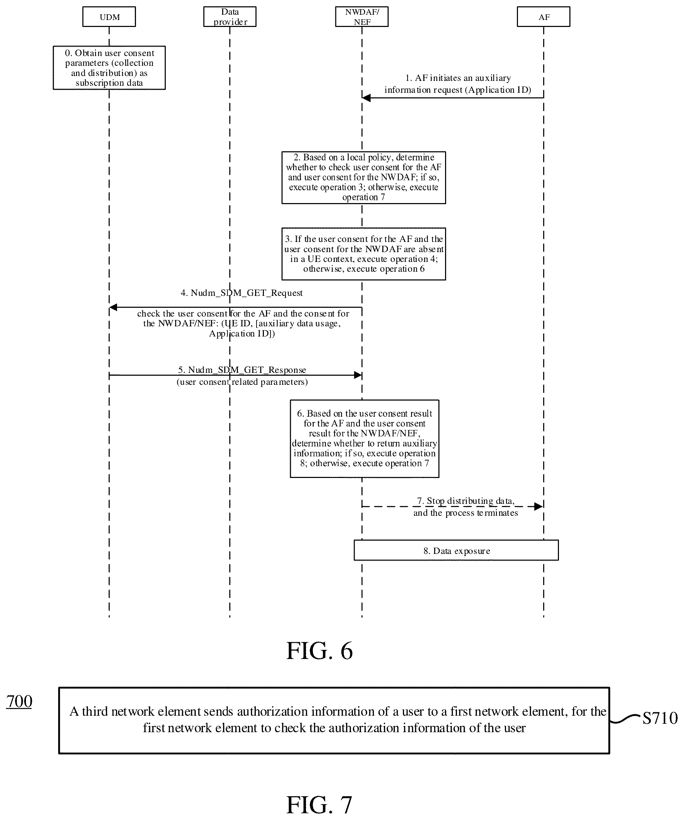

FIG. 6 is a diagram of another dual-layer user consent check and data collection process according to an embodiment of the present disclosure, and the process is applicable to a non-roaming scenario. In the non-roaming scenario, an AF, an NEF, and an NWDAF all belong to a home network (HPLMN). Therefore, in the following operations, a policy of the home network may be considered to determine whether user consent for the AF and user consent for the NWDAF need to be obtained, and when the user consent for the AF and the user consent for the NWDAF/NEF need to be obtained, the user consent for the AF and the user consent for the NWDAF/NEF are obtained through one signaling interaction, thereby saving signaling resources. The specific operations illustrated in FIG. 6 are as follows.

Operation 0: a UDM stores user consent information, an operator policy, or a regulatory policy. The user consent information is associated with a user SUPI and stored in the UDM as subscription data.

Operation 1: an AF initiates an AI/ML data authorization request (for example, an auxiliary data information request) to an NWDAF or an NEF.

Operation 2: the NWDAF or the NEF checks a local policy of an operator, and determines whether user consent for the AF and user consent for the NWDAF/NEF need to be checked for requested data (for example, auxiliary data) distributed to the AF, for example, whether they need to be regulated, and whether they involve the privacy data of the user (such as UE location, mobility, abnormal behavior, etc.). For detailed information, please refer to Table 1 above. If the user consent for the AF and the user consent for the NWDAF need to be checked, operation 3 is executed, otherwise, operations 3-6 are skipped and operation 7 is directly executed. Both the AF and the NWDAF belong to a home network, i.e., the HPLMN, and therefore, in the operations, the user consent for the HPLMN is considered.

Operation 3: the NWDAF or the NEF retrieves related user consent information, that is, user consent information for the AF and user consent information for the NWDAF/NEF, from a related context of a UE maintained in a database of the NWDAF or the NEF, and if the user consent information for the AF and the user consent for the NWDAF/NEF are absent in the UE context, operation 4 is executed. If the user consent information for the AF and the user consent information for the NWDAF/NEF are retrieved in the related context of the UE, operation 6 is executed.

Operation 4: the NWDAF or the NEF sends (UE ID, [auxiliary data usage, Application ID]) to the UDM through an Nudm_SDM_GET_Request interface to check the user consent information for the AF and the user consent information for the NWDAF/NEF. The interface is configured to provide a UDM subscription data management service, and retrieve UE subscription data related to a consumer network element from the UDM through a Get service operation.

Operation 5: the UDM retrieves user consent information, that is, the user consent information for the AF and the user consent information for the NWDAF/NEF, and sends an Nudm_SDM_Get Response message to the NWDAF or the NEF, where returned and queried subscription data includes the user consent information for the AF and the user consent information for the NWDAF/NEF. After receiving the response message, the NWDAF or the NEF stores the user consent information for the AF and the user consent information for the NWDAF/NEF in the UE context of the NWDAF or the NEF.

Operation 6: based on the operator policy, the regulatory policy, the user consent for the AF, and the user consent for the NWDAF/NEF, the NWDAF or NEF determines whether to analyze data of the user and provide a data analysis result to the AF. For example, if the data returned by the UDM is that it consents to authorize the data to be used, the NWDAF or the NEF determines that it is authorized to analyze the data of the user and provide the data analysis result to the AF, and the process continues by executing operation 8. Otherwise, the NWDAF or the NEF determines that it is not authorized to analyze the data of the user and provide the data analysis result to the AF, and the process continues by executing operation 7.

Operation 7: the NWDAF or the NEF rejects the auxiliary data request of the AF, the process is terminated, and a specific cause is provided.

Operation 8: the NWDAF or the NEF retrieves whether related auxiliary data exists in local data, and if so, the NWDAF or the NEF directly exposes the related auxiliary data to the AF. If not, the NWDAF or the NEF sends a data/analysis request to a data provider, where the data provider may include core network element(s) such as an AMF and/or an SMF, and may further include network element(s) that may be subsequently added newly. Moreover, the NWDAF or the NEF starts collecting requested data according the result, and finally exposes the related auxiliary data to the AF.

In the foregoing embodiment, the NWDAF or the NEF obtains the user consent information for the AF and the user consent information for the NWDAF/NEF from the UDM through the Nudm_SDM_Get Response message, so that obtaining the user consent information for the AF and obtaining the user consent information for the NWDAF/NEF can be completed in one signaling interaction, thereby saving signaling resources. Certainly, the NWDAF or the NEF may also separately obtain the user consent information for the AF and the user consent information for the NWDAF/NEF.

In the present embodiment, when the AF belongs to an operator network function entity, the NWDAF may execute functions such as authorization check, data collection and analysis, and/or data result exposure to the AF. When the AF belongs to a third party function entity independent of the operator, the NEF may execute functions such as authorization check, data collection and analysis, and/or data result exposure to the AF.

The message parameters involved in the protocol interaction processes involved in the foregoing implementations are only examples, and the specific parameters may change as the AI/ML service changes.

In conclusion, in the authorization method provided in the embodiments of the present disclosure, a dual-layer user consent mechanism is separately considered for the AF and the core network element. Specifically, before collecting the privacy data related to the user, the core network element first obtains the user consent. Moreover, before exposing the privacy data related to the user to the AF, the core network element also obtains the user consent. Further, in determining whether to check the user consent, the check of the local policy of the country/region in which the operator is located is considered.

The embodiments of the present disclosure further propose an authorization method. FIG. 7 is a flowchart of an authorization method 700 according to an embodiment of the present disclosure, and the method is applicable to the system illustrated in FIG. 1, but is not limited thereto. The method includes at least some of the following contents.

S710: a third network element sends authorization information of a user to a first network element, for the first network element to check the authorization information of the user.

The third network element may include a UDM, and the first network element may include an NWDAF or an NEF.

In some implementations, the authorization information of the user may include first authorization information and second authorization information, where the first authorization information is used to indicate whether the collection and/or analysis of data of the user is allowed, and the second authorization information is used to indicate whether the data of the user and/or a data analysis result is allowed to be provided to a second network element.

The second network element may include an AF.

The data of the user may include AI/ML auxiliary data.

In some implementations, the authorization information includes user consent. The first authorization information includes user consent for the first network element (for example, the NWDAF or the NEF), and the first authorization information includes user consent for the second network element (for example, the AF).

The third network element sends the authorization information of the user to the first network element, which may include the following operations.

The third network element receives at least one of an identifier of a UE, an application identifier, or a data usage from the first network element; and the third network element sends the first authorization information and/or the second authorization information of the user to the first network element.

The third network element may send the first authorization information and the second authorization information of the user in one signaling interaction, or may send the first authorization information and the second authorization information to the first network element separately.

For a specific implementation of the present embodiment, reference may be made to the description regarding the third network element in the foregoing implementations involved in FIGS. 3-6, and details are not described herein again.

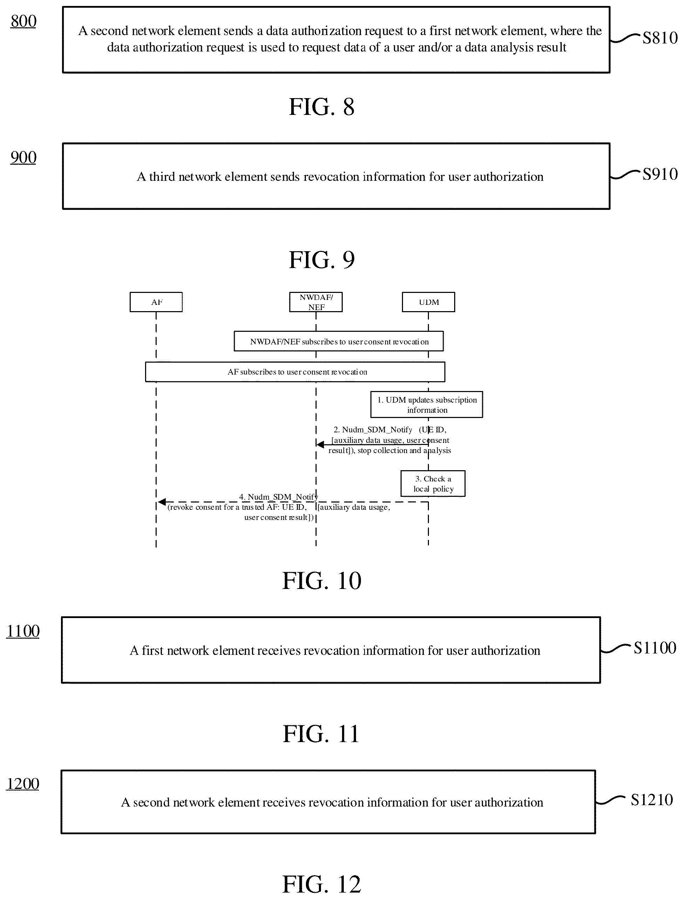

The embodiments of the present disclosure further propose an authorization method. FIG. 8 is a flowchart of an authorization method 800 according to an embodiment of the present disclosure, and the method is applicable to the system illustrated in FIG. 1, but is not limited thereto. The method includes at least some of the following contents.

S810: a second network element sends a data authorization request to a first network element, where the data authorization request is used to request data of a user and/or a data analysis result.

The second network element may include an AF, and the first network element may include an NWDAF or an NEF.

The data may include AI/ML auxiliary data.

For a specific implementation of the present embodiment, reference may be made to the description regarding the second network element in the foregoing implementations involved in FIGS. 3-6, and details are not described herein again.

The foregoing describes the dual-layer user consent check phase in the dual-layer authorization mechanism provided in the present embodiments of the present disclosure. The embodiments of the present disclosure further propose a dual-layer user consent revocation method. Using user consent revocation in an AI/ML scenario as an example, all related entities (such as the AF, the NEF, and the NWDAF) may subscribe to user consent revocation as a service in the UDM, and use a subscription notification process. When the privacy policy of the user changes, for example, there is no longer consent to the NWDAF or the NEF collecting the user data or using the data for analysis, the UDM may notify a network element subscribing to a data change service to stop collecting or using related data for analysis. The process can respond to the change in the user consent in a timely manner, thereby preventing the privacy of the user from being compromised.

FIG. 9 is a flowchart of an authorization method 900 according to an embodiment of the present disclosure, and the method is applicable to the system illustrated in FIG. 1, but is not limited thereto. The method includes at least some of the following contents.

S910: a third network element sends revocation information for user authorization.

The third network element may include a UDM.

In some implementations, the revocation information for the user authorization may include revocation information for first authorization and/or revocation information for second authorization.

Herein, the revocation information for the first authorization indicates that collection and/or analysis of data of a user is not allowed; and the revocation information for the second authorization indicates that the data of the user and/or a data analysis result is not allowed to be provided to a second network element.

The foregoing data may include AI/ML auxiliary data.

The third network element may send the revocation information for the user authorization when the user authorization is revoked. By sending the revocation information for the user authorization to a network element subscribing to user consent revocation, the latest user consent information may be provided to the related network element in a timely manner when the user consent information changes, so as to protect the privacy data of the user.

In some implementations, the revocation information for the user authorization includes revocation information for user consent.

When sending the revocation information for the user authorization, a user consent result may be sent, and at least one of an identifier of a UE, an application identifier, or a data usage may also be sent.

In some implementations, the third network element may send the revocation information for the user authorization to a first network element, to instruct the first network element to stop collecting and/or analyzing data of a user. The first network element may include an NWDAF or an NEF.

In some implementations, the third network element may send the revocation information for the user authorization to a second network element, to instruct to delete data related to the user authorization. The second network element may include an AF.

In some implementations, the third network element may send the revocation information for the user authorization to the second network element based on a second policy. The second policy may include at least one of an operator policy or a regulatory requirement.

FIG. 10 is a diagram of a user consent revocation process according to an embodiment of the present disclosure. All related entities (such as the AF, the NEF, and the NWDAF) may subscribe to user consent revocation as a service in the UDM, and reuse a subscription notification process. When the privacy policy of the user changes, for example, there is no longer consent to the NWDAF collecting user data or using the data for analysis, or there is no longer consent to providing the user data and/or a data analysis result to the AF, the UDM should notify a network element subscribing to a data change service to stop collecting or using the related data for analysis, and to stop providing the user data and/or the data analysis result to the AF. The process can respond to the change in the user consent in a timely manner, thereby preventing the privacy of the user from being compromised. As illustrated in FIG. 10, the user consent revocation process includes the following operations 0-4.

Operation 0: a data consumer (such as the AF) subscribes to user consent revocation as a service in a UDM, and reuses a subscription notification process. Moreover, an NWDAF or an NEF subscribes to user consent revocation as a service in the UDM, and reuses the subscription notification process.

Operation 1: the UDM updates subscription information, which is intended to revoke user consent based on a request of a user. The user may change his or her user consent, for example, the user consent for the NWDAF or NEF to collect and analyze user data, or the user consent for the AF to utilize the user data for AI/ML operations is changed.

Operation 2: the UDM sends an Nudm_SDM_Notify message to the NWDAF or the NEF, where the Nudm_SDM_Notify message includes a UE ID, an Application ID, and a user consent result. The UE ID is related to a user ID (e.g., a SUPI). The user consent result indicates whether a data handler is allowed to process data based on a data processing purpose. Upon receiving the request, the NWDAF or NEF will stop analyzing and collecting specified user data, and delete all data related to the user consent.

Operation 3: the UDM checks a local policy and local laws and regulations, as well as regulatory policies, and determines whether to notify the AF of the user consent revocation. If so, the next operation is executed based on whether the AF is located within a trust domain.

Operation 4: the UDM sends an Nudm_SDM_Notify message to the AF. The message may include the UE ID, the Application ID, an auxiliary data usage, and the user consent result. After receiving the message, the AF processes related data based on the local policy and the local laws and regulations, for example, data previously obtained with the user consent is deleted.

It can be seen that the authorization mechanism provided in the embodiments of the present disclosure may be applicable to authorization for the AF to collect and use data related to user privacy from the 5G core network in the AI/ML scenario, including the user consent checks and revocations for the core network element and the AF. This can prevent unnecessary information from being exposed to the AF or the related core network element, thereby protecting user privacy.

FIG. 11 is a flowchart of an authorization method 1100 according to an embodiment of the present disclosure, and the method is applicable to the system illustrated in FIG. 1, but is not limited thereto. The method includes at least some of the following contents.

S1110: a first network element receives revocation information for user authorization.

The first network element may include an NWDAF or an NEF.

In some implementations, the revocation information for the user authorization may include revocation information for first authorization and/or revocation information for second authorization. The revocation information for the first authorization indicates that collection and/or analysis of data of a user is not allowed, and the revocation information for the second authorization indicates that the data of the user and/or a data analysis result is not allowed to be provided to a second network element.

The foregoing data may include AI/ML auxiliary data.

In some implementations, the revocation information for the user authorization includes revocation information for user consent.

The first network element receives the revocation information for the user authorization, which may include: the first network element receives a user consent result, and receives at least one of an identifier of a UE, an application identifier, or a data usage.

After receiving the revocation information for the user authorization, the first network element may stop, based on the revocation information for the user authorization, collecting and/or analyzing the data of the user.

Before the operation S1110 described above, the first network element may subscribe to a notification service for user authorization revocation from a third network element. The third network element may include a UDM.

For a specific implementation of the present embodiment, reference may be made to the description regarding the first network element in the foregoing implementations involved in FIGS. 9-10, and details are not described herein again.

FIG. 12 is a flowchart of an authorization method 1200 according to an embodiment of the present disclosure, and the method is applicable to the system illustrated in FIG. 1, but is not limited thereto. The method includes at least some of the following contents.

S1210: a second network element receives revocation information for user authorization.

The second network element may include an AF.

In some implementations, the revocation information for the user authorization may include revocation information for first authorization and/or revocation information for second authorization. The revocation information for the first authorization indicates that collection and/or analysis of data of a user is not allowed, and the revocation information for the second authorization indicates that the data of the user and/or a data analysis result is not allowed to be provided to the second network element.

The foregoing data may include AI/ML auxiliary data.

In some implementations, the revocation information for the user authorization may include revocation information for user consent.

In some implementations, the second network element receives the revocation information for the user authorization, which may include: the second network element receives a user consent result, and receives at least one of an identifier of a UE, an application identifier, or a data usage.

In some implementations, the method may further include: the second network element deletes, based on the revocation information for the user authorization, data related to the user authorization.

In some implementations, before operation S1210 described above, the second network element may subscribe to a notification service for user authorization revocation from a third network element. The third network element may include a UDM.

For a specific implementation of the present embodiment, reference may be made to the description regarding the second network element in the foregoing implementations involved in FIGS. 9-10, and details are not described herein again.

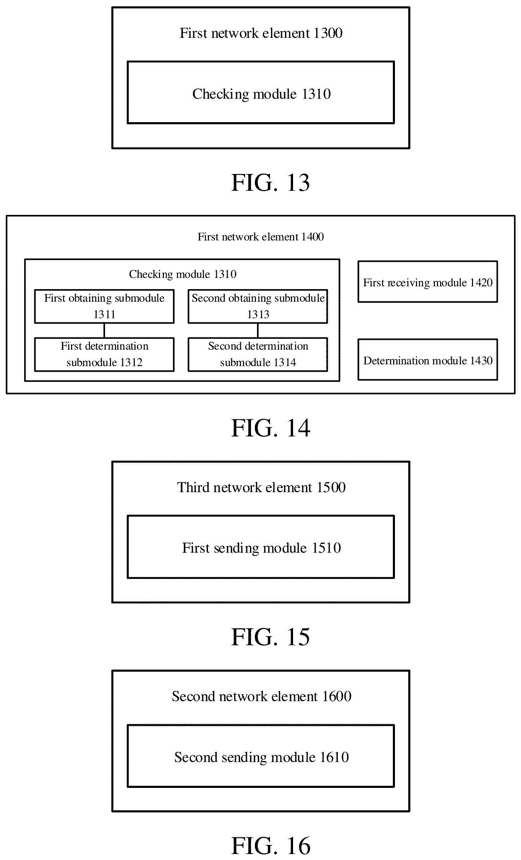

The embodiments of the present disclosure further propose a first network element. FIG. 13 is a schematic structural diagram of a first network element 1300 according to an embodiment of the present disclosure. The first network element includes a checking module 1310.

The checking module 1310 is configured to check authorization information of a user, and to provide data of the user and/or a data analysis result to a second network element when the check result is as follows: collection and/or analysis of the data of the user is allowed; and the data of the user and/or the data analysis result is allowed to be provided to the second network element.

In some implementations, the checking module 1310 is configured to check first authorization information and second authorization information of the user.

The first authorization information is used to indicate whether the collection and/or analysis of the data of the user is allowed; and the second authorization information is used to indicate whether the data of the user and/or the data analysis result is allowed to be provided to the second network element.

In some implementations, the authorization information includes user consent; the first authorization information includes user consent for the first network element; and the first authorization information includes user consent for the second network element.

In some implementations, the checking module 1310 includes a first obtaining submodule 1311 and a first determination submodule 1312.

The first obtaining submodule 1311 is configured to obtain the first authorization information of the user.

The first determination submodule 1312 is configured to determine, based on the first authorization information, whether the collection and/or analysis of the data of the user is allowed.

In some implementations, the first obtaining submodule 1311 is configured to query a locally stored UE context, and obtain the first authorization information of the user from the UE context.

In some implementations, the first obtaining submodule 1311 is configured to obtain the first authorization information of the user from a third network element.

In some examples, the first obtaining submodule 1311 is configured to send at least one of an identifier of a UE, an application identifier, or a data usage to the third network element; and receive the first authorization information of the user from the third network element.

In some implementations, the checking module 1310 includes a second obtaining submodule 1313 and a second determination submodule 1314.

The second obtaining submodule 1313 is configured to obtain the second authorization information of the user.

The second determination submodule 1314 is configured to determine, based on the second authorization information, whether the data of the user and/or the data analysis result is allowed to be provided to the second network element.

In some implementations, the second obtaining submodule 1313 is configured to query a locally stored UE context, and obtain the second authorization information of the user from the UE context.

In some implementations, the second obtaining submodule 1313 is configured to obtain the second authorization information of the user from a third network element.

In some implementations, the second obtaining submodule 1313 is configured to send at least one of an identifier of a UE, an application identifier, and a data usage to the third network element; and receive the second authorization information of the user from the third network element.

FIG. 14 is a structural diagram of a first network element 1400 according to an embodiment of the present disclosure, and the first network element 1400 includes one or more features of the foregoing embodiment of the first network element. In a possible implementation, in the embodiment of the present disclosure, the first network element further includes a first receiving module 1420.

The first receiving module 1420 is configured to receive a data authorization request from the second network element.

In some optional implementations, the first network element further includes a determination module 1430.

The determination module 1430 is configured to determine whether the authorization information of the user needs to be checked, and if so, obtain the first authorization information of the user and/or the second authorization information of the user.

In some implementations, the determination module 1430 is configured to determine, based on a first policy and/or a data type related to the data authorization request, whether the authorization information of the user needs to be checked.

In some embodiments, the first policy includes at least one of an operator policy or a regulatory requirement.

In some implementations, the first network element includes an NWDAF or an NEF.

In some implementations, the second network element includes an AF.

In some implementations, the third network element includes a UDM.

In some embodiments, the data includes AI/ML auxiliary data.

In some implementations, the first network element and the second network element belong to a same PLMN or different PLMNs.

It should be understood that the foregoing and other operations and/or functions of the modules in the communication device according to the embodiment of the present disclosure are intended to implement corresponding processes of the first network element in the method 300 in FIG. 3, and for the sake of brevity, details are not described herein again.

The embodiments of the present disclosure further propose a third network element. FIG. 15 is a structural diagram of a third network element 1500 according to an embodiment of the present disclosure. The third network element includes a first sending module 1510.

The first sending module 1510 is configured to send authorization information of a user to a first network element, for the first network element to check the authorization information of the user.

In some implementations, the authorization information of the user includes first authorization information and second authorization information for checking.

Herein, the first authorization information is used to indicate whether collection and/or analysis of data of the user is allowed; and the second authorization information is used to indicate whether the data of the user and/or a data analysis result is allowed to be provided to a second network element.

In some implementations, the authorization information includes user consent; the first authorization information includes user consent for the first network element; and the first authorization information includes user consent for the second network element.

In some implementations, the first sending submodule 1510 is configured to receive at least one of an identifier of a UE, an application identifier, or a data usage from the first network element; and send the first authorization information and/or the second authorization information of the user to the first network element.

In some implementations, the first network element includes an NWDAF or an NEF.

In some implementations, the third network element includes a UDM.

In some implementations, the second network element includes an AF.

In some embodiments, the data includes AI/ML auxiliary data.

It should be understood that the foregoing and other operations and/or functions of the modules in the communication device according to the embodiment of the present disclosure are intended to implement corresponding processes of the third network element in the method 700 in FIG. 7, and for the sake of brevity, details are not described herein again.

The embodiments of the present disclosure further propose a second network element. FIG. 16 is a structural diagram of a second network element 1600 according to an embodiment of the present disclosure. The second network element includes a second sending module 1610.

The second sending module 1610 is configured to send a data authorization request, where the data authorization request is used to request data of a user and/or a data analysis result.

In some implementations, the second network element includes an AF.

In some implementations, the first network element includes an NWDAF or an NEF.

In some embodiments, the data includes AI/ML auxiliary data.

It should be understood that the foregoing and other operations and/or functions of the modules in the communication device according to the embodiment of the present disclosure are intended to implement corresponding processes of the second network element in the method 800 in FIG. 8, and for the sake of brevity, details are not described herein again.

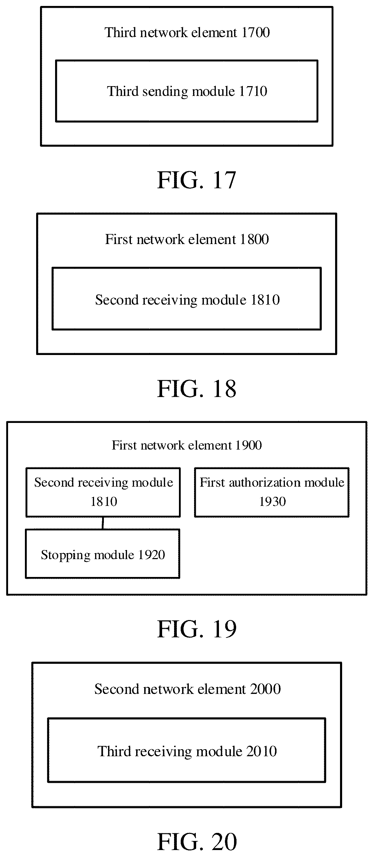

The embodiments of the present disclosure further propose a third network element. FIG. 17 is a structural diagram of a third network element 1700 according to an embodiment of the present disclosure. The third network element includes a third sending module 1710.

The third sending module 1710 is configured to send revocation information for user authorization.

In some implementations, the revocation information for the user authorization includes revocation information for first authorization and/or revocation information for second authorization.

The revocation information for the first authorization indicates that collection and/or analysis of data of a user is not allowed; and the revocation information for the second authorization indicates that the data of the user and/or a data analysis result is not allowed to be provided to a second network element.

In some embodiments, the data includes AI/ML auxiliary data.

In some implementations, the revocation information for the user authorization includes revocation information for user consent.

In some implementations, the third sending module 1710 is configured to send a user consent result, and send at least one of an identifier of a UE, an application identifier, or a data usage.

In some implementations, the third sending module 1710 is configured to send the revocation information for the user authorization when the user authorization is revoked.

In some implementations, the third sending module 1710 is configured to send the revocation information for the user authorization to a first network element, to instruct the first network element to stop collecting and/or analyzing the data of the user.

In some implementations, the third sending module 1710 is configured to send the revocation information for the user authorization to the second network element, to instruct to delete data related to the user authorization.

In some implementations, the third sending module 1710 is configured to send, based on a second policy, the revocation information for the user authorization to the second network element.

In some embodiments, the second policy includes at least one of an operator policy or a regulatory requirement.

In some implementations, the third network element includes a UDM.

In some implementations, the first network element includes an NWDAF or an NEF.

In some implementations, the second network element includes an AF.

It should be understood that the foregoing and other operations and/or functions of the modules in the communication device according to the embodiment of the present disclosure are intended to implement corresponding processes of the third network element in the method 900 in FIG. 9, and for the sake of brevity, details are not described herein again.

The embodiments of the present disclosure further propose a first network element. FIG. 18 is a structural diagram of a first network element 1800 according to an embodiment of the present disclosure. The first network element includes a second receiving module 1810.

The second receiving module 1810 is configured to receive revocation information for user authorization.

In some implementations, the revocation information for the user authorization includes revocation information for first authorization and/or revocation information for second authorization.

Herein, the revocation information for the first authorization indicates that collection and/or analysis of data of a user is not allowed; and the revocation information for the second authorization indicates that the data of the user and/or a data analysis result is not allowed to be provided to a second network element.

In some embodiments, the data includes AI/ML auxiliary data.

In some implementations, the revocation information for the user authorization includes revocation information for user consent.

In some implementations, the second receiving module 1810 is configured to receive a user consent result, and send at least one of an identifier of a UE, an application identifier, or a data usage.

FIG. 19 is a structural diagram of a first network element 1900 according to an embodiment of the present disclosure, and the first network element 1900 includes one or more features of the foregoing embodiment of the first network element 1800. In a possible implementation, in the embodiment of the present disclosure, the first network element further includes a stopping module 1920.

The stopping module 1920 is configured to stop, based on the revocation information for the user authorization, collecting and/or analyzing the data of the user.

In some optional implementations, the first network element further includes a first authorization module 1930.

The first authorization module 1930 is configured to subscribe to a notification service for user authorization revocation from a third network element.

In some implementations, the first authorization module 1930 is configured to receive, from the third network element, the revocation information for the user authorization.

In some implementations, the first network element includes an NWDAF or an NEF.

In some implementations, the third network element includes a UDM.

It should be understood that the foregoing and other operations and/or functions of the modules in the communication device according to the embodiment of the present disclosure are intended to implement corresponding processes of the first network element in the method 1100 in FIG. 11, and for the sake of brevity, details are not described herein again.

The embodiments of the present disclosure further propose a second network element. FIG. 20 is a structural diagram of a second network element 2000 according to an embodiment of the present disclosure. The second network element includes a third receiving module 2010.

The third receiving module 2010 is configured to receive revocation information for user authorization.

In some implementations, the revocation information for the user authorization includes revocation information for first authorization and/or revocation information for second authorization.

Herein, the revocation information for the first authorization indicates that collection and/or analysis of data of a user is not allowed; and the revocation information for the second authorization indicates that the data of the user and/or a data analysis result is not allowed to be provided to a second network element.

In some embodiments, the data includes AI/ML auxiliary data.

In some implementations, the revocation information for the user authorization includes revocation information for user consent.

In some implementations, the third receiving module 2010 is configured to receive a user consent result, and send at least one of an identifier of a UE, an application identifier, or a data usage.

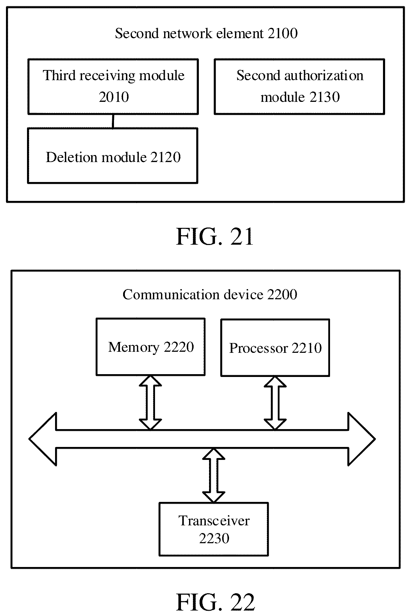

FIG. 21 is a structural diagram of a second network element 2100 according to an embodiment of the present disclosure, and the second network element 2100 includes one or more features of the foregoing embodiment of the second network element 2000. In a possible implementation, in the embodiment of the present disclosure, the second network element further includes a deletion module 2120.

The deletion module 2120 is configured to delete, based on the revocation information for the user authorization, data related to the user authorization.

In some optional implementations, the second network element further includes a second authorization module 2130.

The second authorization module 2130 is configured to subscribe to a notification service for user authorization revocation from a third network element.

In some implementations, the second network element includes an AF.

In some implementations, the third network element includes a UDM.

It should be understood that the foregoing and other operations and/or functions of the modules in the communication device according to the embodiment of the present disclosure are intended to implement corresponding processes of the second network element in the method 1200 in FIG. 12, and for the sake of brevity, details are not described herein again.

It should be noted that functions described with respect to each module (submodule, unit, component, or the like) in the communication device according to the embodiments of the present disclosure may be implemented by different modules (submodules, units, components, or the like), or may be implemented by the same module (submodule, unit, component, or the like). For example, the first receiving module and the second receiving module may be different modules, or may be the same module, both of which can implement their corresponding functions in the embodiments of the present disclosure. In addition, the sending module and the receiving module in the embodiments of the present disclosure may be implemented by a transceiver of the device, and some or all of the other modules may be implemented by a processor of the device.

FIG. 22 is a structural diagram of a communication device 2200 according to an embodiment of the present disclosure. The communication device 2200 illustrated in FIG. 22 includes a processor 2210. The processor 2210 may invoke and run a computer program from a memory so as to implement methods in the embodiments of the present disclosure.

In some implementations, as illustrated in FIG. 22, the communication device 2200 may further include a memory 2220. The processor 2210 may invoke and run a computer program from the memory 2220 so as to implement the communication device in the embodiments of the present disclosure.

The memory 2220 may be one separate component independent of the processor 2210, or may be integrated in the processor 2210.

In some implementations, as illustrated in FIG. 22, the communication device 2200 may further include a transceiver 2230. The processor 2210 may control the transceiver 2230 to perform communication with other devices. Specifically, the transceiver may send information or data to other devices, or receive information or data sent by other devices.

The transceiver 2230 may include a transmitter and a receiver. The transceiver 2230 may further include an antenna, and the number of antennas may be one or more.

In some implementations, the communication device 2200 may be the first network element, the second network element, or the third network element in the embodiments of the present disclosure, and the communication device 2200 may implement corresponding processes implemented by the first network element, the second network element, or the third network element in the respective methods of the embodiments of the present disclosure. For the sake of brevity, details are not described herein again.

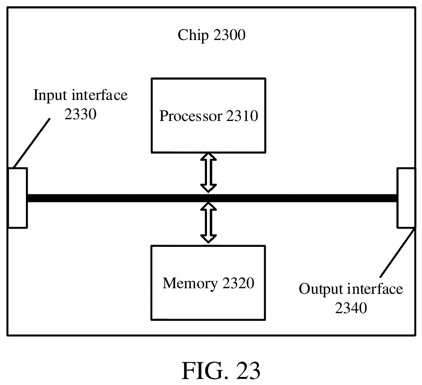

FIG. 23 is a structural diagram of a chip 2300 according to an embodiment of the present disclosure. The chip 2300 illustrated in FIG. 23 includes a processor 2310. The processor 2310 may invoke and run a computer program from a memory so as to implement methods in the embodiments of the present disclosure.

In some implementations, as illustrated in FIG. 23, the chip 2300 may further include a memory 2320. The processor 2310 may invoke and run a computer program from the memory 2320 so as to implement methods in the embodiments of the present disclosure.

The memory 2320 may be one separate component independent of the processor 2310, or may be integrated in the processor 2310.

In some implementations, the chip 2300 may further include an input interface 2330. The processor 2310 may control the input interface 2330 to perform communication with other devices or chips. Specifically, the input interface may obtain information or data sent by other devices or chips.

In some implementations, the chip 2300 may further include an output interface 2340. The processor 2310 may control the output interface 2340 to perform communication with other devices or chips. Specifically, the output interface may output information or data to other devices or chips.

In some implementations, the chip is applicable to the communication device in the embodiments of the present disclosure, and the chip may implement corresponding processes implemented by the network device in the respective methods of the embodiments of the present disclosure. For the sake of brevity, details are not described herein again.

It should be understood that the chip mentioned in the embodiment of the present disclosure may also be referred to as a system-level chip, a system chip, a chip system, or a system-on-chip chip, or the like.

The processor mentioned above may be a general-purpose processor, a Digital Signal Processor (DSP), a Field-Programmable Gate Array (FPGA), an Application-Specific Integrated Circuit (ASIC), or another programmable logic device, a transistor logic device, a discrete hardware component, or the like. The general-purpose processor mentioned above may be a microprocessor, any conventional processor, or the like.

The memory mentioned above may be a volatile memory or a nonvolatile memory, or may include both volatile and nonvolatile memories. The non-volatile memory may be a Read-Only Memory (ROM), a Programmable ROM (PROM), an Erasable PROM (EPROM), an Electrically EPROM (EEPROM), or a flash memory. The volatile memory may be a Random Access Memory (RAM).

It should be understood that the foregoing memory is illustrative but not restrictive. For example, the memory in the embodiments of the present disclosure may also be a Static RAM (SRAM), a Dynamic RAM (DRAM), a Synchronous DRAM (SDRAM), a Double Data Rate SDRAM (DDR SDRAM), an Enhanced SDRAM, (ESDRAM), a Synch Link DRAM (SLDRAM), a Direct Rambus RAM (DR RAM), or the like. That is, the memory in the embodiments of the present disclosure is intended to include, but is not limited to, the foregoing and any other suitable type of memory.

The above embodiments may be implemented in whole or in part by software, hardware, firmware, or any combination thereof. When implemented by using software, the above embodiments may be implemented as a whole or in part in the form of a computer program product. The computer program product includes one or more computer instructions. When the computer program instructions are loaded and executed on a computer, the processes or functions according to the embodiments of the present disclosure are completely or partially generated. The computer may be a general-purpose computer, a special-purpose computer, a computer network, or other programmable apparatuses. The computer instructions may be stored in a computer-readable storage medium, or transmitted from one computer-readable storage medium to another computer-readable storage medium. For example, the computer instructions may be transmitted from one website site, computer, server, or data center to another website site, computer, server, or data center via wired (e.g., coaxial cable, optical fiber, or Digital Subscriber Line (DSL)) or wireless (e.g., infrared, wireless, microwave) means. The computer-readable storage medium may be any available medium that can be accessed by a computer, or a data storage device such as a server or a data center that includes one or more available media. The available media may be magnetic media (e.g., a floppy disk, a hard disk, or a magnetic tape), optical media (e.g., a DVD), semiconductor media (e.g., a Solid State Disk (SSD)), or the like.

It should be understood that in various embodiments of the present disclosure, the size of the sequence numbers of various processes described above does not imply the order of execution, and the order of execution of various processes should be determined by the functions and internal logic thereof, and should not constitute any limitation on the implementation processes of the embodiments of the present disclosure.

It can be clearly understood by a person skilled in the art that for the convenience and brevity of the description, reference may be made to the corresponding processes in the foregoing method embodiments for the specific working process of the systems, apparatuses, and units described above, which will not be repeated here.

The above is merely detailed implementations of the present disclosure, but the scope of protection of the present disclosure is not limited thereto. Any person skilled in the art can easily conceive of changes or substitutions within the technical scope disclosed in the present disclosure, and all of the changes or substitutions should be covered by the scope of protection of the present disclosure. Therefore, the scope of protection of the present disclosure should be defined by the scope of protection of the claims.

## Claims

1. An authorization method, comprising:
checking, by a first network element, authorization information of a user, and providing data of the user and/or a data analysis result to a second network element when a check result is as follows:
collection and/or analysis of the data of the user is allowed; and
the data of the user and/or the data analysis result is allowed to be provided to the second network element.

2. The method according to claim 1, wherein checking, by the first network element, the authorization information of the user comprises:
checking, by the first network element, first authorization information and second authorization information of the user, wherein
the first authorization information is used to indicate whether the collection and/or analysis of the data of the user is allowed; and
the second authorization information is used to indicate whether the data of the user and/or the data analysis result is allowed to be provided to the second network element.

3. The method according to claim 2, wherein
the authorization information comprises user consent;
the first authorization information comprises user consent for the first network element; and
the second authorization information comprises user consent for the second network element.

4. The method according to claim 2 or 3, wherein checking, by the first network element, the first authorization information of the user comprises:
obtaining, by the first network element, the first authorization information of the user; and
determining, by the first network element, based on the first authorization information, whether the collection and/or analysis of the data of the user is allowed.

5. The method according to claim 4, wherein obtaining, by the first network element, the first authorization information of the user comprises:
querying, by the first network element, a locally stored User Equipment (UE) context, and obtaining the first authorization information of the user from the UE context.

6. The method according to claim 4, wherein obtaining, by the first network element, the first authorization information of the user comprises:
obtaining, by the first network element, the first authorization information of the user from a third network element.

7. The method according to claim 6, wherein obtaining, by the first network element, the first authorization information of the user from the third network element comprises:
sending, by the first network element, at least one of an identifier of User Equipment (UE), an application identifier, or a data usage to the third network element; and
receiving, by the first network element, the first authorization information of the user from the third network element.

8. The method according to claim 2 or 3, wherein checking, by the first network element, the second authorization information of the user comprises:
obtaining, by the first network element, the second authorization information of the user; and
determining, by the first network element determines, based on the second authorization information, whether the data of the user and/or the data analysis result is allowed to be provided to the second network element.

9. The method according to claim 8, wherein obtaining, by the first network element, the second authorization information of the user comprises:
querying, by the first network element, a locally stored User Equipment (UE) context, and obtaining the second authorization information of the user from the UE context.

10. The method according to claim 8, wherein obtaining, by the first network element, the second authorization information of the user comprises:
obtaining, by the first network element, the second authorization information of the user from a third network element.

11. The method according to claim 10, wherein obtaining, by the first network element, the second authorization information of the user from the third network element comprises:
sending, by the first network element, at least one of an identifier of User Equipment (UE), an application identifier, or a data usage to the third network element; and
receiving, by the first network element, the second authorization information of the user from the third network element.

12. The method according to any one of claims 1-11, further comprising:
receiving, by the first network element, a data authorization request from the second network element.

13. The method according to any one of claims 1-12, further comprising:
determining, by the first network element, whether the authorization information of the user needs to be checked, and if so, obtaining first authorization information of the user and/or second authorization information of the user.

14. The method according to claim 13, wherein determining, by the first network element, whether the authorization information of the user needs to be checked comprises:
determining, by the first network element, based on a first policy and/or a data type involved in a data authorization request, whether the authorization information of the user needs to be checked.

15. The method according to claim 14, wherein the first policy comprises at least one of an operator policy or a regulatory requirement.

16. The method according to any one of claims 1-15, wherein the first network element comprises a Network Data Analytics Function (NWDAF) or a Network Exposure Function (NEF).

17. The method according to any one of claims 1-16, wherein the second network element comprises an Application Function (AF).

18. The method according to claim 6, 7, 10, or 11, wherein the third network element comprises a User Data Management (UDM).

19. The method according to any one of claims 1-18, wherein the data comprises Artificial Intelligence (Al)/Machine Learning (ML) auxiliary data.

20. The method according to any one of claims 1-19, wherein the first network element and the second network element belong to a same Public Land Mobile Network (PLMN) or different PLMNs.

21. An authorization method, comprising:
sending, by a third network element, authorization information of a user to a first network element, for the first network element to check the authorization information of the user.

22. The method according to claim 21, wherein the authorization information of the user comprises first authorization information and second authorization information, wherein
the first authorization information is used to indicate whether collection and/or analysis of data of the user is allowed; and
the second authorization information is used to indicate whether the data of the user and/or a data analysis result is allowed to be provided to a second network element.

23. The method according to claim 22, wherein
the authorization information comprises user consent;
the first authorization information comprises user consent for the first network element; and
the first authorization information comprises user consent for the second network element.

24. The method according to any one of claims 21-23, wherein sending, by the third network element, the authorization information of the user to the first network element comprises:
receiving, by the third network element, at least one of an identifier of User Equipment (UE), an application identifier, or a data usage from the first network element; and
sending, by the third network element, the first authorization information and/or the second authorization information of the user to the first network element.

25. The method according to any one of claims 21-24, wherein the first network element comprises a Network Data Analytics Function (NWDAF) or a Network Exposure Function (NEF).

26. The method according to any one of claims 21-24, wherein the third network element comprises a User Data Management (UDM).

27. The method according to any one of claims 22-24, wherein the second network element comprises an Application Function (AF).

28. The method according to any one of claims 22-24, wherein the data comprises Artificial Intelligence (Al)/Machine Learning (ML) auxiliary data.

29. An authorization method, comprising:
sending, by a second network element, a data authorization request, the data authorization request being used to request data of a user and/or a data analysis result.

30. The method according to claim 29, wherein sending, by the second network element, the data authorization request comprises:
sending, by the second network element, the data authorization request to a first network element.

31. The method according to claim 29 or 30, wherein the second network element comprises an Application Function (AF).

32. The method according to claim 30, wherein the first network element comprises a Network Data Analytics Function (NWDAF) or a Network Exposure Function (NEF).

33. The method according to any one of claims 29-32, wherein the data comprises Artificial Intelligence (AI)/Machine Learning (ML) auxiliary data.

34. An authorization method, comprising:
sending, by a third network element, revocation information for user authorization.

35. The method according to claim 34, wherein the revocation information for the user authorization comprises revocation information for first authorization and/or revocation information for second authorization; wherein
the revocation information for the first authorization indicates that collection and/or analysis of data of a user is not allowed; and
the revocation information for the second authorization indicates that the data of the user and/or a data analysis result is not allowed to be provided to a second network element.

36. The method according to claim 35, wherein the data comprises Artificial Intelligence (AI)/Machine Learning (ML) auxiliary data.

37. The method according to any one of claims 34-36, wherein the revocation information for the user authorization comprises revocation information for user consent.

38. The method according to claim 37, wherein sending, by the third network element, the revocation information for the user authorization comprises:
sending, by the third network element, a user consent result, and sending at least one of an identifier of User Equipment (UE), an application identifier, or a data usage.

39. The method according to any one of claims 34-38, wherein sending, by the third network element, the revocation information for the user authorization comprises:
sending, by the third network element, the revocation information for the user authorization when the user authorization is revoked.

40. The method according to any one of claims 34-39, wherein sending, by the third network element, the revocation information of the user authorization comprises:
sending, by the third network element, the revocation information for the user authorization to a first network element, to instruct the first network element to stop collecting and/or analyzing data of a user.

41. The method according to any one of claims 34-39, wherein sending, by the third network element, the revocation information of the user authorization comprises:
sending, by the third network element, the revocation information for the user authorization to a second network element, to instruct to delete data related to the user authorization.

42. The method according to claim 41, wherein sending, by the third network element, the revocation information of the user authorization to the second network element comprises:
sending, by the third network element, based on a second policy, the revocation information for the user authorization to the second network element.

43. The method according to claim 42, wherein the second policy comprises at least one of an operator policy or a regulatory requirement.

44. The method according to any one of claims 34-43, wherein the third network element comprises a User Data Management (UDM).

45. The method according to claim 40, wherein the first network element comprises a Network Data Analytics Function (NWDAF) or a Network Exposure Function (NEF).

46. The method according to any one of claims 35-45, wherein the second network element comprises an Application Function (AF).

47. An authorization method, comprising:
receiving, by a first network element, revocation information for user authorization.

48. The method according to claim 47, wherein the revocation information for the user authorization comprises revocation information for first authorization and/or revocation information for second authorization; wherein
the revocation information for the first authorization indicates that collection and/or analysis of data of a user is not allowed; and
the revocation information for the second authorization indicates that the data of the user and/or a data analysis result is not allowed to be provided to a second network element.

49. The method according to claim 48, wherein the data comprises Artificial Intelligence (AI)/Machine Learning (ML) auxiliary data.

50. The method according to any one of claims 47-49, wherein the revocation information for the user authorization comprises revocation information for user consent.

51. The method according to claim 48, wherein receiving, by the first network element, the revocation information for the user authorization comprises:
receiving, by the first network element, a user consent result, and receiving at least one of an identifier of User Equipment (UE), an application identifier, or a data usage.

52. The method according to any one of claims 48-51, further comprising:
stopping, by the first network element, based on the revocation information for the user authorization, collecting and/or analyzing the data of the user.

53. The method according to any one of claims 48-52, further comprising:
subscribing, by the first network element, to a notification service for user authorization revocation from a third network element.

54. The method according to claim 53, wherein the first network element receives the revocation information for the user authorization from the third network element.

55. The method according to any one of claims 48-54, wherein the first network element comprises a Network Data Analytics Function (NWDAF) or a Network Exposure Function (NEF).

56. The method according to claim 54, wherein the third network element comprises a User Data Management (UDM).

57. An authorization method, comprising:
receiving, by a second network element, revocation information for user authorization.

58. The method according to claim 57, wherein the revocation information for the user authorization comprises revocation information for first authorization and/or revocation information for second authorization; wherein
the revocation information for the first authorization indicates that collection and/or analysis of data of a user is not allowed; and
the revocation information for the second authorization indicates that the data of the user and/or a data analysis result is not allowed to be provided to the second network element.

59. The method according to claim 58, wherein the data comprises Artificial Intelligence (AI)/Machine Learning (ML) auxiliary data.

60. The method according to any one of claims 57-59, wherein the revocation information for the user authorization comprises revocation information for user consent.

61. The method according to claim 60, wherein receiving, by the second network element, the revocation information for the user authorization comprises:
receiving, by the second network element, a user consent result, and receiving at least one of an identifier of User Equipment (UE), an application identifier, or a data usage.

62. The method according to any one of claims 57-61, further comprising:
deleting, by the second network element, based on the revocation information for the user authorization, data related to the user authorization.

63. The method according to any one of claims 57-62, further comprising:
subscribing, by the second network element, to a notification service for user authorization revocation from a third network element.

64. The method according to any one of claims 57-63, wherein the second network element comprises an Application Function (AF).

65. The method according to claim 63, wherein the third network element comprises a User Data Management (UDM).

66. A first network element, comprising:
a checking module, configured to check authorization information of a user, and to provide data of the user and/or a data analysis result to a second network element when a check result is as follows:
collection and/or analysis of the data of the user is allowed; and
the data of the user and/or the data analysis result is allowed to be provided to the second network element.

67. A third network element, comprising:
a first sending module, configured to send authorization information of a user to a first network element, for the first network element to check the authorization information of the user.

68. A second network element, comprising:
a second sending module, configured to send a data authorization request, the data authorization request being used to request data of a user and/or a data analysis result.

69. A third network element, comprising:
a third sending module, configured to send revocation information for user authorization.

70. A first network element, comprising:
a second receiving module, configured to receive revocation information for user authorization.

71. A second network element, comprising:
a third receiving module, configured to receive revocation information for user authorization.

72. A communication device, comprising: a processor, a memory, and a transceiver, wherein the memory is configured to store a computer program, and the processor is configured to invoke and run the computer program stored in the memory and control the transceiver to execute the method according to any one of claims 1 to 20, 21 to 28, 29 to 33, 34 to 46, 47 to 56, or 57 to 65.

73. A chip, comprising: a processor, configured to invoke and run a computer program from a memory, so that a device having the chip mounted thereon executes the method according to any one of claims 1 to 20, 21 to 28, 29 to 33, 34 to 46, 47 to 56, or 57 to 65.

74. A computer-readable storage medium, configured to store a computer program, the computer program causing a computer to execute the method according to any one of claims 1 to 20, 21 to 28, 29 to 33, 34 to 46, 47 to 56, or 57 to 65.

75. A computer program product, comprising computer program instructions that cause a computer to execute the method according to any one of claims 1 to 20, 21 to 28, 29 to 33, 34 to 46, 47 to 56, or 57 to 65.

76. A computer program, for causing a computer to execute the method according to any one of claims 1 to 20, 21 to 28, 29 to 33, 34 to 46, 47 to 56, or 57 to 65.
